# EUROPÄISCHE PATENTSCHRIFT

(11) **EP 3 625 110 B1**
(45) Veröffentlichungstag und Bekanntmachung des Hinweises auf die Patenterteilung: **21.07.2021**
(21) Anmeldenummer: 18717886.8
(22) Anmeldetag: 06.04.2018
(51) Int. Cl.: B62D 5/04

(54) **ELEKTROMECHANISCHE KRAFTFAHRZEUGLENKUNG**
VEHICLE ELECTROMECHANICAL STEERING
DIRECTION ÉLECTROMÉCANIQUE ASSISTÉE DE VÉHICULE

(30) Priorität: 16.05.2017 DE 102017208248
(43) Veröffentlichungstag der Anmeldung: 25.03.2020
(73) Patentinhaber: Volkswagen Aktiengesellschaft, 38440 Wolfsburg (DE)
(72) Erfinder: KNOPP, Thomas, 38159 Vechelde (DE); THIES, Joachim, 38304 Wolfenb ttel (DE); JENKE, Klaas-Simon, 38106 Braunschweig (DE)
(86) Internationale Anmeldenummer: PCT/EP2018/058931
(87) Internationale Veröffentlichungsnummer: WO 2018/210486

(56) Entgegenhaltungen:
- EP-A1- 2 595 854
- JP-A- 2009 120 094
- US-A1- 2013 180 794

## Beschreibung

Die Erfindung bezieht sich auf eine elektromechanische Kraftfahrzeuglenkung, umfassend eine Lenksäule, eine Zahnstange, ein Lenkritzel, das die Lenksäule mit der Zahnstange koppelt, und eine elektrische Antriebseinrichtung mit einem Elektromotor und einem Schneckenrad, das an dem Lenkritzel angeordnet ist.

Elektromechanische Kraftfahrzeuglenkungen finden aufgrund ihres Kraftstoffeinsparpotenzial zunehmend Verbreitung. Hierbei sind unterschiedliche Typen in Bezug auf die Anordnung der elektrischen Antriebseinrichtung zu unterscheiden.

Bei einem ersten Lenkungstyp wird das Antriebsmoment der elektrischen Antriebseinrichtung in die Lenksäule eingeleitet (EPSc - "column"). Allerdings sind hierbei die maximalen Antriebsmomente aufgrund der Übertragung über die Lenksäule beschränkt. Da sich die elektrische Antriebseinrichtung hierbei üblicherweise im oberen Bereich der Lenksäule, also nahe am Fahrer befindet, ergeben sich besondere Herausforderungen im Hinblick auf das Crashverhalten.

Eine zweite Möglichkeit besteht darin, die elektrische Antriebseinrichtung direkt am Lenkritzel zu platzieren (EPSp - "pinion"). Hierdurch sind höhere Lenkleistungen als bei einer Lenkung vom Typ EPSc möglich. Allerdings sind die Packagemöglichkeiten wegen der Anordnung der elektrischen Antriebseinrichtung am Lenkritzel beschränkt, zumal in diesem Bereich zusätzlich üblicherweise ein Drehmomentsensor angeordnet ist. Eine solche Lenkung ist beispielsweise in EP 1 545 959 A1 beschrieben. US 2013/180794 A1 offenbart eine elektromechanische Kraftfahrzeuglenkung nach dem Oberbegriff des Anspruchs 1.

Bei einem dritten Lenkungstyp ist die elektrische Antriebseinrichtung an einem zweiten Ritzel angebracht, welches zusätzlich zu dem Lenkritzel mit der Zahnstange kämmt (EPSdp - "double pinion"). An der Zahnstange müssen dementsprechend zwei Verzahnungsabschnitte für die beiden Ritzel ausgebildet werden, so dass der Aufwand im Vergleich zu einer Lenkung vom Typ EPSp größer ist.

Anstelle über ein zweites Ritzel kann die vom Elektromotor erzeugte Kraft durch eine Kombination aus einem Kugelgewindetrieb und einem Zahnriementrieb auf die Zahnstange übertragen werden (EPSapa - "axle parallel").

Die vorliegende Erfindung bezweckt eine Verbesserung einer elektromechanischen Fahrzeuglenkung vom Typ EPSp, bei der die elektrische Antriebseinrichtung direkt am Lenkritzel angreift. Dabei zielt die Erfindung insbesondere darauf ab, bei einer solchen Lenkung ein günstigeres Package zu realisieren.

Diese Aufgabe wird durch eine elektromechanische Kraftfahrzeuglenkung mit den Merkmalen von Patentanspruch 1 gelöst. Die erfindungsgemäße Kraftfahrzeuglenkung umfasst eine Lenksäule, eine Zahnstange, ein Lenkritzel, das die Lenksäule mit der Zahnstange koppelt, und eine elektrische Antriebseinrichtung mit einem Elektromotor und einem Schneckenrad, das an dem Lenkritzel angeordnet ist. Sie zeichnet sich dadurch aus, dass die Zahnstange zwischen dem Schneckenrad der elektrischen Antriebseinrichtung und der Lenksäule liegt.

Dies ermöglicht eine kompaktere Bauweise und flexiblere Anordnung der elektrischen Antriebseinrichtung.

Vorteilhafte Ausgestaltungen der Erfindung sind Gegenstand weiterer Patentansprüche.

In einer Ausführungsvariante ist das Schneckenrad an einem Endabschnitt des Lenkritzels fliegend gelagert, wodurch dessen Montage erleichtert wird.

Das Lenkritzel ist vorzugsweise mittels eines ersten Lagers und eines zweiten Lagers drehbar in einem Lenkungsgehäuse gelagert, wobei ein Verzahnungsabschnitt des Lenkritzels, welcher mit der Zahnstange in Eingriff steht, zwischen den beiden Lagern liegen kann. Die Lagerung des Lenkritzels dient dadurch gleichzeitig der Lagerung des Schneckenrads.

In einer Abwandlung hiervon ist es jedoch auch möglich, dass sowohl der Verzahnungsabschnitt des Lenkritzels, welcher mit der Zahnstange in Eingriff steht, sowie das Schneckenrad zwischen diesen beiden Lagern liegen.

Weiterhin kann die elektrische Antriebseinrichtung eine Schneckenwelle aufweisen, die mit dem Elektromotor antriebsmäßig gekoppelt ist und mit dem Schneckenrad in Eingriff steht. In einer Ausführungsvariante schließen die Drehachse der Schneckenwelle und die Drehachse des Schneckenrads einen Kreuzungswinkel im Bereich von 20° bis 80° miteinander ein. Die beiden Drehachsen verlaufen selbstverständlich windschief zueinander. Unter dem Kreuzungswinkel wird vorliegend der von den Richtungsvektoren der Drehachsen eingeschlossene Schnittwinkel verstanden.

In einer alternativen Ausführungsvariante ist vorgesehen, dass die Drehachse der Schneckenwelle mit der Drehachse des Schneckenrads einen Kreuzungswinkel von 90° einschließt.

Im Hinblick auf eine kompakte Bauweise kann die elektrische Antriebseinrichtung ein einstufiges Getriebe aufweisen.

Vorzugsweise verläuft dazu die Schneckenwelle koaxial zur Drehachse des Elektromotors. Dadurch kann die Schneckenwelle gegebenenfalls in eine Motorabtriebswelle integriert werden. In Bezug auf die Vertikalrichtung in Einbaulage der Kraftfahrzeuglenkung an einem Kraftfahrzeug kann das Schneckenrad unterhalb der Zahnstange angeordnet werden, wodurch Bauraumkonflikte mit einem Drehmomentsensor an der Schnittstelle zwischen dem Linkritzel und der Lenksäule vermieden werden.

Auch der Elektromotor kann in Bezug auf die Vertikalrichtung in Einbaulage der Kraftfahrzeuglenkung unterhalb der Zahnstange angeordnet sein.

In der Erfindung verläuft die Drehachse des Elektromotors parallel zur Zahnstange. Es ist auch möglich, den Elektromotor in seiner Lage in einer Ebene unterhalb der Zahnstange zur achsparallelen Lage verschwenkt anzuordnen.

Ferner ist es in einer weiteren Ausführungsvariante möglich, die Lage der Drehachse des Elektromotors in einer Ebene zu verschwenken, welche unterhalb der Zahnstange das Lenkritzel schneidet.

Weiterhin kann das Schneckenrad ist als eigenständiges Bauteil an dem Lenkritzel befestigt sein. Die Befestigung kann dabei formschlüssig oder kraftschlüssig erfolgen.

Im Fall einer kraftschlüssigen Verbindung zwischen dem Schneckenrad und dem Lenkritzel kann die Verbindung derart konfiguriert sein, dass diese bei Überschreiten eines vorgegebenen Moments durchrutscht, um einen Überlastschutz zu bieten.

Nachfolgend wird die Erfindung anhand von in der Zeichnung in den Figuren 1 bis 6 dargestellten Ausführungsbeispielen näher erläutert. Die Zeichnung zeigt in:
- Figur 1: ein erstes Ausführungsbeispiel einer elektromechanischen Kraftfahrzeuglenkung nach der Erfindung in einer Ansicht von vorne,
- Figur 2: eine räumliche Ansicht des ersten Ausführungsbeispiels,
- Figur 3: ein zweites Ausführungsbeispiel einer elektromechanischen Kraftfahrzeuglenkung nach der Erfindung,
- Figur 4: eine erste Ausführungsvariante für ein Lenkritzel mit daran befestigtem Schneckenrad,
- Figur 5: eine zweite Ausführungsvariante für ein Lenkritzel mit daran befestigtem Schneckenrad,
- Figur 6: ein drittes Ausführungsbeispiel einer elektromechanischen Kraftfahrzeuglenkung nach der Erfindung,
- Figur 7: ein viertes Ausführungsbeispiel einer elektromechanischen Kraftfahrzeuglenkung, das nicht Teil der Erfindung ist.

Die nachfolgend näher erläuterten Ausführungsbeispiele beziehen sich sämtlich auf eine elektromechanische Kraftfahrzeuglenkung vom Typ EPSp mit direkt am Lenkritzel angreifender elektrischer Antriebseinrichtung.

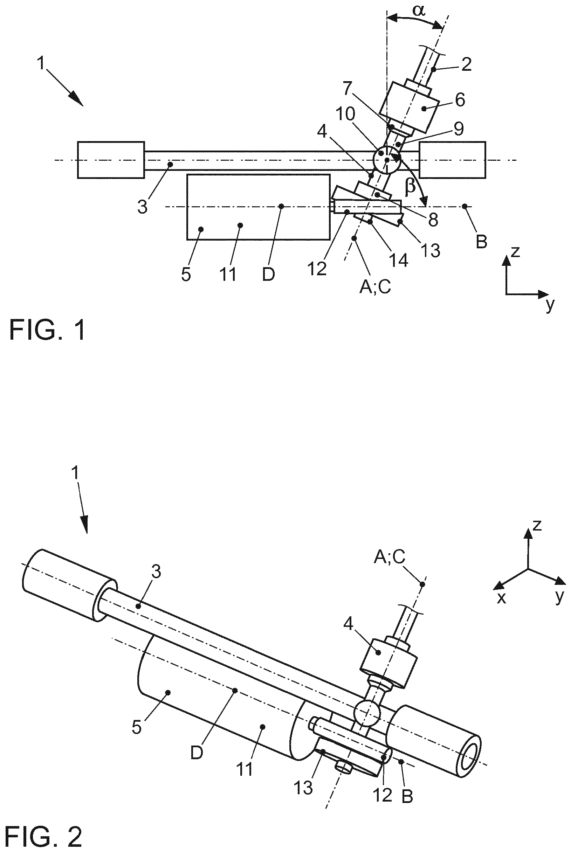

Figur 1 zeigt ein erstes Ausführungsbeispiel einer solchen Lenkung 1 mit einer Lenksäule 2, einer Zahnstange 3, einem Lenkritzel 4, das die Lenksäule 2 mit der Zahnstange 3 koppelt, sowie einer elektrischen Antriebseinrichtung 5, deren Antriebsmoment an dem Lenkritzel 4 in die Lenkung 1 eingeleitet wird.

Von der Lenksäule 2 ist lediglich eine sich in Richtung zu einem nicht näher dargestellten Lenkrad erstreckende Zwischenwelle dargestellt, an welche das Lenkritzels 4 angeschlossen ist. Im Kopplungsbereich zwischen der Lenksäule 2 und dem Lenkritzel 4 ist eine Drehmomentmesseinrichtung 6 angeordnet.

Das Lenkritzel 4 ist über zwei Lager 7 und 8 in einem in Figur 1 nicht näher dargestellten Lenkungsgehäuse drehbar gelagert. Das Lenkritzel 4 weist einen Verzahnungsabschnitt 9 auf, welcher mit einer Verzahnung der Zahnstange 3 in Eingriff steht. Weiterhin ist in Figur 1 ein Druckstück 10 angedeutet, welches die Zahnstange 3 gegen den Verzahnungsabschnitt 9 des Lenkritzels 4 drückt.

Eine Drehachse A des Lenkritzels 4 schließt in Einbaulage an einem Kraftfahrzeug in einer von der Fahrzeugquerrichtung y und der Vertikalrichtung z auf gespannten Vertikalebene yz mit der Vertikalrichtung z einen Winkel α mit einem Betrag im Bereich von 0 bis 40° ein. In einer von der Fahrzeuglängsrichtung x und der Vertikalrichtung z aufgespannten Vertikalebene xz schließt die Drehachse A mit der Vertikalrichtung z einen Winkel mit einem Betrag im Bereich von 0 bis 60° ein.

Die elektrische Antriebseinrichtung 5 umfasst einen Elektromotor 11 sowie eine diesem nachgeschaltete Getriebestufe mit einer Schneckenwelle 12 und einem Schneckenrad 13.

Vorzugsweise ist die Getriebestufe einstufig. Die Schneckenwelle 12 schließt in diesem Fall unmittelbar an den Elektromotor 11 an. Insbesondere kann die Schneckenwelle in eine Motorabtriebswelle integriert sein.

Die Schneckenwelle 12 kann koaxial zur Drehachse D des Elektromotors 11 verlaufen.

Das Schneckenrad 13 ist an dem Lenkritzel 4 angeordnet und befestigt.

Vorzugsweise schließen die Drehachse B der Schneckenwelle 12 und die Drehachse C des Schneckenrads 13, welche mit der Drehachse A des Lenkritzels 4 zusammenfällt, einen Kreuzungswinkel β im Bereich von 20° bis 80° miteinander ein.

Erfindungsgemäß liegt das Schneckenrad 13 auf der der Lenksäule 2 gegenüberliegenden Seite der Zahnstange 3. Die Zahnstange 3 ist somit zwischen dem Schneckenrad 13 der elektrischen Antriebseinrichtung 5 und der Lenksäule 2 angeordnet.

Die Anordnung der elektrischen Antriebseinrichtung 5 wird durch die Drehmomentmesseinrichtung 6 nicht beeinträchtigt. Dies erhöht die Möglichkeit unterschiedlicher Positionen der elektrischen Antriebseinrichtung 5 relativ zur Zahnstange 3. Zudem ergibt sich hierdurch eine kompakte Ausgestaltung.

Bei dem in den Figuren 1 und 2 dargestellten Ausführungsbeispiel ist die elektrische Antriebseinrichtung 5 in Bezug auf die Vertikalrichtung z in Einbaulage unterhalb der Zahnstange 3 angeordnet.

Insbesondere können das Schneckenrad 13 und vorzugsweise auch der Elektromotor 11 in Bezug auf die Vertikalrichtung unterhalb der Zahnstange 3 angeordnet sein. Zudem verläuft bei der Erfindung gemäß Figur 1 und 2 die Drehachse D des Elektromotors 11 parallel zur Zahnstange 3. Jedoch kann von einer solchen Anordnung auch abgewichen werden, wie dies weiter unten noch näher erläutert werden wird.

Wie bereits erwähnt, ist das Lenkritzel 4 über zwei Lager 7 und 8 drehbar gelagert. Über diese beiden Lager 7 und 8 werden gleichzeitig die Verzahnungskräfte der Getriebestufe abgestützt, so dass für das Schneckenrad 13 kein zusätzliches Lager benötigt wird.

Insbesondere kann das Schneckenrad 13 an einem Endabschnitt 14 des Lenkritzels 4 fliegend gelagert sein, wodurch sich das zweite Lager 8 zwischen dem Verzahnungsabschnitt 9 und dem Endabschnitt 14 des Lenkritzels 4, an welchem das Schneckenrad 13 befestigt ist, befindet. Der Verzahnungsabschnitt 9 des Lenkritzels 4 liegt hierbei zwischen den beiden Lagern 7 und 8.

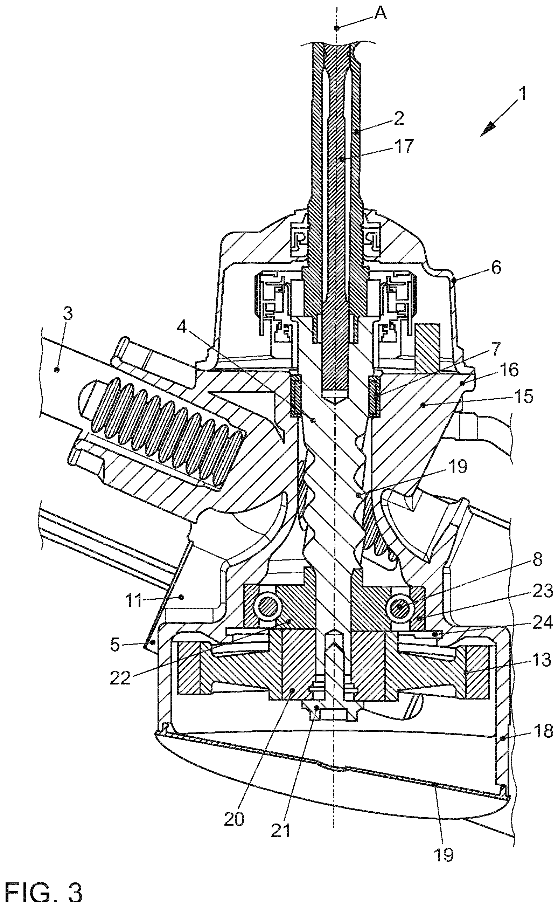

Ein Beispiel für eine konstruktive Umsetzung ist in Figur 3 anhand eines zweiten Ausführungsbeispiels dargestellt. Dem ersten Ausführungsbeispiel entsprechende Bauteile sind vorliegend mit den gleichen Bezugszeichen versehen.

Insbesondere ist in Figur 3 zusätzlich ein Lenkungsgehäuse 15 dargestellt, in welchem sich das Lenkritzel 4 über ein erstes Lager 7 beispielsweise in Form eines Nadellagers und ein zweites Lager 8 beispielsweise in Form eines Kugellagers abstützt.

Das Lenkungsgehäuse 15 bildet eingangsseitig einen Flansch 16 zur Abstützung der Drehmomentmesseinrichtung 6 aus, in welche sich die Lenksäule 2 mit einer Zwischenwelle hinein erstreckt und mit dem Lenkritzel 4 mittels eines Torsionsstabs 17 gekoppelt ist.

Die elektrische Antriebseinrichtung 5 greift am der Lenksäule 2 gegenüberliegenden Endabschnitt 14 des Lenkritzels 4 an. Dazu ist das Schneckenrad 13 an diesem freien Endabschnitt 14 befestigt. Das Lenkungsgehäuse 15 bildet dementsprechend an seiner dem Flansch 16 gegenüberliegenden Seite eine topfartige Aufnahme 18 für das Schneckenrad 13 aus. Die topfartige Aufnahme 18 kann durch einen Deckel 19 verschlossen sein.

Das Schneckenrad 13 ist vorliegend mit einem Nabenabschnitt 20 auf den Endabschnitt 14 des Lenkritzels 4 aufgeschoben und mittels eines Sicherungselements 21 axial an diesem gesichert. Bei der in Figur 3 dargestellten, beispielhaften Befestigungsvariante wird über diese Axialsicherung gleichzeitig ein Lagerinnenring 22 des zweiten Lagers 8 an dem Lenkritzel 4 festgelegt. Ein Lageraußenring 23 des zweiten Lagers 8 kann beispielsweise mittels eines Wellensicherungsrings 24 im Lenkungsgehäuse 15 festgelegt sein.

Zwischen dem Innenumfang des Nabenabschnitts 20 des Schneckenrad 13 und dem Außenumfang des Endabschnitt 14 des Lenkritzels 4 kann eine formschlüssige Verbindung beispielsweise in Form einer Passverzahnung vorgesehen sein.

Es ist jedoch auch möglich, die Befestigung des Schneckenrads 13 an dem Lenkritzel 4 lediglich kraftschlüssig derart vorzunehmen, dass diese bei Überschreiten eines vorgegebenen Moments durchrutscht, um einen Überlastschutz zu bieten. Beispielsweise kann mit einem geeigneten Sicherungselement 21 eine entsprechende Vorspannung aufgebracht werden.

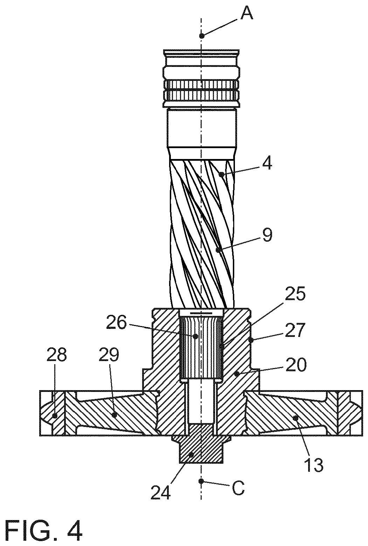

Figur 4 zeigt eine Ausführungsvariante für die Befestigung des Schneckenrads 13 am Lenkritzel 4. Hierbei weist ein Nabenabschnitt 20 des Schneckenrads 13 an seinem Innenumfang einen Verzahnungsabschnitt 25 auf, der axial auf eine Außenverzahnung 26, welche am Lenkritzel 4 ausgebildet ist, aufgeschoben ist. Als Sicherungselement 21 dient vorliegend eine Befestigungsschraube, welche stirnseitig in den Endabschnitt 14 des Lenkritzels 4 eingeschraubt ist und den Nabenabschnitt 20 gegen eine Anlageschulter am Lenkritzel 4 verspannt.

Der Nabenabschnitt 20 kann sich bis zu dem Verzahnungsabschnitt 9 des Lenkritzels 4 erstrecken und gleichzeitig als Lagerinnenring des zweiten Lagers 8 dienen oder aber einen Abschnitt 27 zur Befestigung eines solchen Lagerinnenrings 22 ausbilden.

Ein Zahnkranzabschnitt 28 des Schneckenrads 13 ist über einen Verbindungsabschnitt 29 mit dem Nabenabschnitt 20 verbunden. Die genannten Abschnitte 20, 28 und 29 des Schneckenrads 13 können einstückige miteinander ausgeführt sein. Es ist jedoch auch möglich einzelne Abschnitte als separate Bauteile zu fertigen und letztere miteinander zu verbinden. Hierdurch können für die einzelnen Abschnitte 20, 28 und 29 unterschiedliche Werkstoffe verwendet werden.

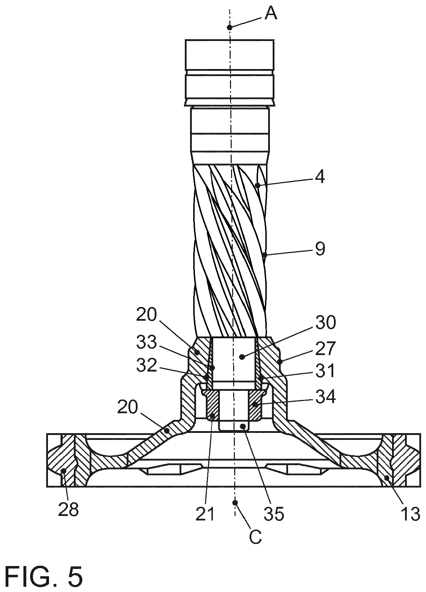

Figur 5 zeigt eine weitere Ausführungsvariante für die Befestigung des Schneckenrads 13 am Lenkritzel 4 mittels einer rein kraftschlüssigen Verbindung.

Die kraftschlüssige Verbindung kann beispielsweise als Kegelverband ausgelegt sein.

Am Endabschnitt des Lenkritzels 4 kann hierzu ein zylindrischer Sitz 30 ausgebildet sein. Auf diesen Sitz 30 sind der Nabenabschnitt 20 des Schneckenrads 13 sowie eine Kegelhülse 31 aufgeschoben. Die Kegelhülse 31 ist am Außenumfang des Sitzes 30 zentriert und weist an ihrem Außenumfang eine Kegelfläche 32 auf, welche mit einer Kegelfläche 33 am Innenumfang des Nabenabschnitt 20 in Eingriff steht. Die beiden Kegelflächen 32 und 33 werden mittels eines Sicherungselements 21 in Form einer Befestigungsmutter 34, die auf einen Gewindeabschnitt 35 am Ende des Lenkritzels 4 aufgeschraubt ist, gegeneinander verspannt. Anstelle einer Befestigungsmutter 34 kann wie in Figur 4 ebenfalls eine Befestigungsschraube zum Einsatz kommen, genauso wie in Figur 4 eine Axialsicherung mittels einer Befestigungsmutter 34 analog Figur 5 möglich ist.

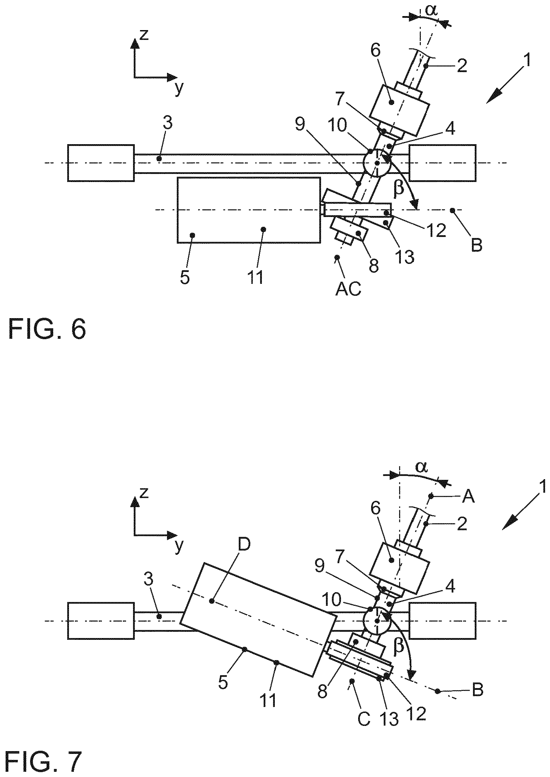

Figur 6 zeigt in Form eines dritten Ausführungsbeispiels eine weitere Abwandlungsmöglichkeit der vorstehend erläuterten elektromechanischen Kraftfahrzeuglenkungen. Dem ersten und zweiten Ausführungsbeispiel entsprechende Bauteile sind vorliegend wieder mit den gleichen Bezugszeichen versehen.

Im Unterschied zu den oben erläuterten Ausführungsformen sind bei dem dritten Ausführungsbeispiel sowohl der Verzahnungsabschnitt 9 des Lenkritzels 4, welcher mit der Zahnstange 3 in Eingriff steht, als auch das Schneckenrad 13 zwischen den beiden Lagern 7 und 8 angeordnet.

Auch hier schließen die Drehachse B der Schneckenwelle 12 und die Drehachse C des Schneckenrads 13 bzw. Drehachse A des Lenkritzels 4 einen Kreuzungswinkel β im Bereich von 20° bis 80° miteinander ein.

Zudem ist es wie oben grundsätzlich möglich, die elektrische Antriebseinrichtung 5 in einer horizontalen Ebene unterhalb der Zahnstange 3, welche die Drehachse B der Schneckenwelle 12 enthält, gegenüber der in Figur 6 dargestellten Position, in welcher die Drehachse B parallel zur Zahnstange 3 verläuft, verschwenkt anzuordnen.

Figur 7 zeigt im Rahmen eines vierten Ausführungsbeispiels, das nicht Teil der Erfindung ist, eine weitere

Abwandlungsmöglichkeit für die Anordnung der elektrischen Antriebseinrichtung relativ zur Zahnstange 3. Hierbei ist vorgesehen, dass die Drehachse B der Schneckenwelle 12 und die Drehachse C des Schneckenrads 13 einen β Kreuzungswinkel von 90° einschließen. Das Schneckenrad 13 bleibt hierbei jedoch auf der der Lenksäule 2 gegenüberliegenden Seite der Zahnstange 3 angeordnet. Insbesondere befindet sich das Schneckenrad 13 in diesem Fall zwischen dem Verzahnungsabschnitt 9 des Lenkritzels 4 und dem zweiten Lager 8 am Endabschnitt 14 des Lenkritzels 4. Die Drehachse D des Elektromotors 11 ist dementsprechend zu einer Horizontalebene xy um einen Winkel ungleich Null angestellt.

Auch hier ist es wiederum möglich, die elektrische Antriebseinrichtung 5 in einer Ebene, auf welcher die die Drehachse C des Schneckenrad 13 senkrecht steht, gegenüber der in Figur 7 dargestellten Position verschwenkt anzuordnen. Diese Ebene schneidet das Lenkritzel 4 vorzugsweise in Vertikalrichtung unterhalb der Zahnstange 3.

Die Erfindung wurde vorstehend anhand von Ausführungsbeispielen in den Figuren 1 bis 6 näher erläutert. Die Ausführungsbeispiele dienen dazu, die Ausführbarkeit der Erfindung zu belegen. Die Erfindung umfasst alle durch die Patentansprüche definierten Ausgestaltungen.

### Bezugszeichenliste

- 1: elektromechanische Kraftfahrzeuglenkung (kurz: Lenkung)
- 2: Lenksäule
- 3: Zahnstange
- 4: Lenkritzel
- 5: elektrische Antriebseinrichtung
- 6: Drehmomentmesseinrichtung
- 7: erstes Lager
- 8: zweites Lager
- 9: Verzahnungsabschnitt des Lenkritzels
- 10: Druckstück
- 11: Elektromotor
- 12: Schneckenwelle
- 13: Schneckenrad
- 14: Endabschnitt des Lenkritzels
- 15: Lenkungsgehäuse
- 16: Flansch
- 17: Torsionsstab
- 18: topfartige Aufnahme
- 19: Deckel
- 20: Nabenabschnitt
- 21: Sicherungselement
- 22: Lagerinnenring
- 23: Lageraußenring
- 24: Wellensicherungsring
- 25: Verzahnungsabschnitt
- 26: Außenverzahnung
- 27: Abschnitt zur Lagerbefestigung
- 28: Zahnkranzabschnitt
- 29: Verbindungsabschnitt
- 30: Sitz
- 31: Kegelhülse
- 32: Kegelfläche
- 33: Kegelfläche
- 34: Befestigungsmutter
- 35: Gewindeabschnitt
- A: Drehachse des Lenkritzels
- B: Drehachse der Schneckenwelle
- C: Drehachse des Schneckenrads
- D: Drehachse des Elektromotors
- EPS: electric power steering = elektrische Lenkung
- x: Fahrzeuglängsrichtung
- y: Fahrzeugquerrichtung
- z: Vertikalrichtung (entspricht Fahrzeughochrichtung)
- α: Winkel der Drehachse A zur Vertikalrichtung bei Projektion in die yz Ebene
- β: Kreuzungswinkel zwischen den Drehachsen B und C

## Patentansprüche

1. Elektromechanische Kraftfahrzeuglenkung,
umfassend eine Lenksäule (2),
eine Zahnstange (3),
ein Lenkritzel (4), das die Lenksäule (2) mit der Zahnstange koppelt (3), und eine elektrische Antriebseinrichtung (5) mit einem Elektromotor (11) und einem Schneckenrad (13), das an dem Lenkritzel (4) angeordnet ist,
wobei
die Zahnstange (3) zwischen dem Schneckenrad (13) der elektrischen Antriebseinrichtung
(5) und der Lenksäule (2) liegt,
**dadurch gekennzeichnet, dass**
der Elektromotor (11) eine Drehachse (D) aufweist, die parallel zur Zahnstange (3) verläuft..

2. Elektromechanische Kraftfahrzeuglenkung nach Anspruch 1, **dadurch gekennzeichnet, dass** das Schneckenrad (13) an einem Endabschnitt (14) des Lenkritzels (4) fliegend gelagert ist.

3. Elektromechanische Kraftfahrzeuglenkung nach Anspruch 1 oder 2, **dadurch gekennzeichnet, dass** das Lenkritzel (4) mittels eines ersten Lagers (7) und eines zweiten Lagers (8) drehbar in einem Lenkungsgehäuse (15) gelagert ist, wobei ein Verzahnungsabschnitt (9) des Lenkritzels (4), welcher mit der Zahnstange (3) in Eingriff steht, zwischen diesen beiden Lagern (7, 8) liegt.

4. Elektromechanische Kraftfahrzeuglenkung nach Anspruch 1, **dadurch gekennzeichnet, dass** das Lenkritzel (4) mittels eines ersten Lagers (7) und eines zweiten Lagers (8) drehbar in einem Lenkungsgehäuse (15) gelagert ist, wobei ein Verzahnungsabschnitt (9) des Lenkritzels (4), welcher mit der Zahnstange (3) in Eingriff steht, sowie das Schneckenrad (13) zwischen diesen beiden Lagern (7, 8) liegen.

5. Elektromechanische Kraftfahrzeuglenkung nach einem der Ansprüche 1 bis 4, **dadurch gekennzeichnet, dass** die elektrische Antriebseinrichtung (5) eine Schneckenwelle (12) aufweist, die mit dem Elektromotor (11) antriebsmäßig gekoppelt ist und mit dem Schneckenrad (13) in Eingriff steht, wobei die Drehachse (B) der Schneckenwelle (12) und die Drehachse (A) des Schneckenrads (13) einen Kreuzungswinkel (β) im Bereich von 20° bis 80° miteinander einschließen.

6. Elektromechanische Kraftfahrzeuglenkung nach einem der Ansprüche 1 bis 4, **dadurch gekennzeichnet, dass** die elektrische Antriebseinrichtung (5) eine Schneckenwelle (12) aufweist, die mit dem Elektromotor (11) antriebsmäßig gekoppelt ist und mit dem Schneckenrad (13) in Eingriff steht, wobei die Drehachse (B) der Schneckenwelle (12) und die Drehachse (A) des Schneckenrads (13) einen Kreuzungswinkel (β) von 90° einschließen.

7. Elektromechanische Kraftfahrzeuglenkung nach einem der Ansprüche 1 bis 6, **dadurch gekennzeichnet, dass** die Schneckenwelle (12) koaxial zu einer Drehachse (D) des Elektromotors (11) verläuft.

8. Elektromechanische Kraftfahrzeuglenkung nach einem der Ansprüche 1 bis 7, **dadurch gekennzeichnet, dass** das Schneckenrad (13) in Bezug auf die Vertikalrichtung in Einbaulage der Kraftfahrzeuglenkung unterhalb der Zahnstange (3) angeordnet ist.

9. Elektromechanische Kraftfahrzeuglenkung nach einem der Ansprüche 1 bis 8, **dadurch gekennzeichnet, dass** der Elektromotor (11) in Bezug auf die Vertikalrichtung in Einbaulage der Kraftfahrzeuglenkung unterhalb der Zahnstange (3) angeordnet ist.

10. Elektromechanische Kraftfahrzeuglenkung nach einem der Ansprüche 1 bis 9, **dadurch gekennzeichnet, dass** das Schneckenrad (13) kraftschlüssig an dem Lenkritzel (4) befestigt ist und die Verbindung derart konfiguriert ist, dass diese bei Überschreiten eines vorgegebenen Moments durchrutscht, um einen Überlastschutz zu bieten.

## Claims

1. Vehicle electromechanical steering,
comprising a steering column (2),
a toothed rack (3),
a steering pinion (4) coupling (3) the steering column (2) to the toothed rack, and an electric drive device (5) having an electric motor (11) and a worm wheel (13) arranged on the steering pinion (4),
wherein
the toothed rack (3) lies between the worm wheel (13) of the electric drive device
(5) and the steering column (2),
**characterized in that**
the electric motor (11) has an axis of rotation (D) that runs parallel to the toothed rack (3).

2. Vehicle electromechanical steering according to claim 1, **characterized in that** the worm wheel (13) is arranged in a manner overhung on an end section (14) of the steering pinion (4).

3. Vehicle electromechanical steering according to claim 1 or 2, **characterized in that** the steering pinion (4) is mounted rotatably in a steering housing (15) by means of a first bearing (7) and a second bearing (8), wherein a toothing section (9) of the steering pinion (4) that engages with the toothed rack (3) lies between these two bearings (7, 8).

4. Vehicle electromechanical steering according to claim 1, **characterized in that** the steering pinion (4) is mounted rotatably in a steering housing (15) by means of a first bearing (7) and a second bearing (8), wherein a toothing section (9) of the steering pinion (4) that engages with the toothed rack (3) and the worm wheel (13) lie between these two bearings (7, 8).

5. Vehicle electromechanical steering according to any one of claims 1 to 4, **characterized in that** the electric drive device (5) has a worm shaft (12) that is coupled to the electric motor (11) in a driving manner and engages with the worm wheel (13), wherein the axis of rotation (B) of the worm shaft (12) and the axis of rotation (A) of the worm wheel (13) have a crossing angle (β) in the range from 20° to 80°.

6. Vehicle electromechanical steering according to any one of claims 1 to 4, **characterized in that** the electric drive device (5) has a worm shaft (12) that is coupled to the electric motor (11) in a driving manner and engages with the worm wheel (13), wherein the axis of rotation (B) of the worm shaft (12) and the axis of rotation (A) of the worm wheel (13) have a crossing angle (β) of 90°.

7. Vehicle electromechanical steering according to any one of claims 1 to 6, **characterized in that** the worm shaft (12) extends coaxially with respect to the axis of rotation (D) of the electric motor (11).

8. Vehicle electromechanical steering according to any one of claims 1 to 7, **characterized in that** the worm wheel (13) is arranged below the toothed rack (3) in relation to the vertical direction in the installed position of the motor vehicle steering system.

9. Vehicle electromechanical steering according to any one of claims 1 to 8, **characterized in that** the electric motor (11) is arranged below the toothed rack (3) in relation to the vertical direction in the installed position of the motor vehicle steering system.

10. Vehicle electromechanical steering according to any one of claims 1 to 9, **characterized in that** the worm wheel (13) is non-positively fixed to the steering pinion (4) and the connection is configured such that it slips through when a predetermined torque is exceeded, in order to provide an overload protection.

## Revendications

1. Direction électromécanique assistée de véhicule,
comprenant une colonne de direction (2),
une crémaillère (3),
un pignon de direction (4), couplant la colonne de direction (2) à la crémaillère (3) et un dispositif électrique d'entraînement (5) comprenant un moteur électrique (11) et une roue hélicoïdale (13), disposée sur le pignon de direction (4),
dans laquelle
la crémaillère (3) se trouve entre la roue hélicoïdale (13) du dispositif électrique d'entraînement
(5) et la colonne de direction (2),
**caractérisée en ce que**
le moteur électrique (11) présente un axe de rotation (D), qui s'étend parallèle à la crémaillère (3).

2. Direction électromécanique assistée de véhicule selon la revendication 1, **caractérisée en ce que** la roue hélicoïdale (13) est montée flottante sur une section d'extrémité (14) du pignon de direction (4).

3. Direction électromécanique assistée de véhicule selon la revendication 1 ou 2, **caractérisée en ce que** le pignon de direction (4) est monté au moyen d'un premier palier (7) et d'un second palier (8) rotatif dans un boîtier de direction (15), dans lequel une section de denture (9) du pignon de direction (4), qui vient en prise avec la crémaillère (3), se trouve entre ces deux paliers (7, 8).

4. Direction électromécanique assistée de véhicule selon la revendication 1, **caractérisée en ce que** le pignon de direction (4) est monté au moyen d'un premier palier (7) et d'un second palier (8) rotatif dans un boîtier de direction (15), dans lequel une section de denture (9) du pignon de direction (4), qui vient en prise avec la crémaillère (3) et la roue hélicoïdale (13), se trouvent entre ces deux paliers (7, 8).

5. Direction électromécanique assistée de véhicule selon l'une quelconque des revendications 1 à 4, **caractérisée en ce que** le dispositif électrique d'entraînement (5) présente un arbre à vis sans fin (12), qui est accouplé au moteur électrique (11) par entraînement et vient en prise avec la roue hélicoïdale (13), dans lequel l'axe de rotation (B) de l'arbre à vis sans fin (12) et l'axe de rotation (A) de la roue hélicoïdale (13) forment ensemble un angle de croisement (β) dans la plage de 20° à 80°.

6. Direction électromécanique assistée de véhicule selon l'une quelconque des revendications 1 à 4, **caractérisée en ce que** le dispositif électrique d'entraînement (5) présente un arbre à vis sans fin (12), qui est accouplé au moteur électrique (11) par entraînement et vient en prise avec la roue hélicoïdale (13), dans lequel l'axe de rotation (B) de l'arbre à vis sans fin (12) et l'axe de rotation (A) de la roue hélicoïdale (13) forment un angle de croisement (β) de 90°.

7. Direction électromécanique assistée de véhicule selon l'une quelconque des revendications 1 à 6, **caractérisée en ce que** l'arbre à vis sans fin (12) s'étend coaxial à un axe de rotation (D) du moteur électrique (11).

8. Direction électromécanique assistée de véhicule selon l'une quelconque des revendications 1 à 7, **caractérisée en ce que** la roue hélicoïdale (13) est disposée, par rapport à la direction verticale en position de montage de la direction de véhicule à moteur, sous la crémaillère (3).

9. Direction électromécanique assistée de véhicule selon l'une quelconque des revendications 1 à 8, **caractérisée en ce que** le moteur électrique (11) est disposé, par rapport à la direction verticale en position de montage de la direction de véhicule à moteur, sous la crémaillère (3).

10. Direction électromécanique assistée de véhicule selon l'une quelconque des revendications 1 à 9, **caractérisée en ce que** la roue hélicoïdale (13) est fixée par verrouillage mécanique au pignon de direction (4) et la liaison est conçue de manière à glisser en cas de dépassement d'un couple prédéfini, afin d'offrir une protection contre les surcharges.
